(19) Europäisches Patentamt / European Patent Office / Office européen des brevets

(11) **EP 2 403 196 A1**

(12) **EUROPEAN PATENT APPLICATION**

(43) Date of publication:
04.01.2012 Bulletin 2012/01

(51) Int Cl.:
*H04L 25/02* (2006.01)     *H04L 27/26* (2006.01)

(21) Application number: 10167820.9

(22) Date of filing: 30.06.2010

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Telefonaktiebolaget L M Ericsson (PUBL)**
**164 83 Stockholm (SE)**

(72) Inventors:
• **Lindoff, Bengt**
  **SE-237 36, Bjärred (SE)**
• **Wilhelmsson, Leif**
  **SE-247 55, Dalby (SE)**

(74) Representative: **Boesen, Johnny Peder**
**Zacco Denmark A/S**
**Hans Bekkevolds Allé 7**
**2900 Hellerup (DK)**

(54) **Compensating a spurious interference signal in a receiver of a wireless communications system**

(57)     A method of compensating a spurious interference signal in a receiver of a wireless communications system employing Orthogonal Frequency Division Multiplexing, wherein some resource elements contain pilot symbols modulated with reference information whose transmitted value is known while others contain data symbols, comprises the steps of determining (101) a frequency at which a spurious interference signal may occur; determining (102) subcarriers that may be affected by a spurious interference signal at said determined frequency; receiving (103) an OFDM signal; performing (104) a Fast Fourier Transform operation of the received signal; determining (105) channel estimates for each resource element from received pilot symbols, wherein channel estimates for resource elements transmitted on possibly affected subcarriers are determined by including pilot symbols transmitted on nearby, unaffected subcarriers; equalizing (106) resource elements containing data symbols; generating (107) soft values for the received data; and using (108) the soft values for decoding the received data.

Fig. 5

## Description

Technical Field

The invention relates to compensating a spurious interference signal in a receiver of a wireless communications system employing Orthogonal Frequency Division Multiplexing, OFDM.

Background

The smaller a mobile terminal or a transceiver unit is, the larger is the risk for internally generated interference. One typical example of this is a clock signal leaking into the radio frequency parts and due to non-linear or non-ideal radio frequency components harmonics of the clock are generated that might interfere with the received signal. This is especially a problem at low received signal levels close to the receiver's sensitivity level. Sensitivity is a key parameter for receivers, due to the fact that the sensitivity level is related to the coverage for the terminal. Hence, from an operator point of view there is a selling argument for mobile terminals or modems having good sensitivity.

Problems with spurious signals in the receiver band, e.g. originated from a baseband clock, are typically solved by good layout of different blocks in the baseband and radio chip. However, based on practical experiences it is very hard to make a good chip design from start to avoid such signal leakage.

A prior art solution for this kind of problem is to introduce one or more notch filters in the time domain for notching out the spurious signals. Since the clock frequency and thus also the frequency of potential harmonics are known, notch filters might be designed into the receiver chain. The problem with such a solution is that the notch filters need to work on a high sampling rate (in the order of 10 MHz) in combination with the need for many filter taps for making a narrow notch (the leakage signal is typically only some 100 - 1000 Hz wide). Such a filter design is typically very complex and expensive in terms of size, cost, and current consumption.

Therefore there is a need for methods and apparatus improving the receiver performance, in particular close to the reference sensitivity level, in case of having harmonics from the baseband clock leaking into the receiver chain that do not require costly notch filters that consume considerable power.

Summary

It is an object of embodiments of the invention to provide a method of compensating a spurious interference signal in a receiver of a wireless communications system that is simpler and consumes less power than prior art methods.

According to embodiments of the invention the object is achieved in a method of compensating a spurious interference signal in a receiver of a wireless communications system employing Orthogonal Frequency Division Multiplexing, OFDM, wherein the received signals comprise OFDM symbols, each OFDM symbol of a given duration being transmitted to the receiver as a number of resource elements on a corresponding number of sub-carrier frequencies; and wherein some of said resource elements contain pilot symbols modulated with reference information whose transmitted value is known to the receiver while others contain data symbols. The method comprises the steps of determining a frequency at which a spurious interference signal may occur; determining subcarriers that may be affected by a spurious interference signal at said determined frequency; receiving an OFDM signal; performing a Fast Fourier Transform operation of the received signal; determining channel estimates for each resource element from received pilot symbols, wherein channel estimates for resource elements transmitted on possibly affected subcarriers are determined by including pilot symbols transmitted on nearby, unaffected subcarriers; equalizing resource elements containing data symbols; generating soft values for the received data; and using the soft values for decoding the received data.

When channel estimates for resource elements transmitted on possibly affected subcarriers are determined by including pilot symbols transmitted on nearby, unaffected subcarriers the performance of the receiver in case of interference caused by clock harmonics can be improved significantly in a simple way.

It is noted that in theory all sub-carriers will be affected to a certain degree. However, in practice only a few sub-carriers will be significantly affected, while other sub-carriers are affected so little that it does not disturb their reception or even can not be measured. Thus in practice these sub-carriers can be considered as unaffected. Therefore, in the claims the terms affected and unaffected sub-carriers are used.

In an embodiment the step of determining channel estimates comprises determining the channel estimates for resource elements transmitted on possibly affected subcarriers by interpolation from pilot symbols transmitted on nearby, unaffected subcarriers or from such pilot symbols and the possibly affected pilot symbols.

Further, in an embodiment the step of determining channel estimates comprises the steps of replacing pilot symbols transmitted on possibly affected subcarriers by values interpolated from pilot symbols transmitted on nearby, unaffected subcarriers or from such pilot symbols and the pilot symbol to be replaced; and determining the channel estimates for resource elements transmitted on possibly affected subcarriers from the replaced pilot symbols.

When the method further comprises the step of scaling soft values of data symbols of resource elements transmitted on possibly affected subcarriers by applying a weight factor prior to decoding, the method can be further improved by also weighting the soft values taking the interference from clock harmonic into account.

In an embodiment the method further comprises the steps of determining a power level of said spurious interference signal; and determining said weight factor in dependence of the determined interference power level.

Alternatively, the method may further comprise the step of setting said weight factor to zero, such that the soft values of data symbols of resource elements transmitted on possibly affected subcarriers are cancelled.

Some embodiments of the invention also relate to a receiver for a wireless communications system employing Orthogonal Frequency Division Multiplexing, OFDM, wherein the received signals comprise OFDM symbols, each OFDM symbol of a given duration being transmitted to the receiver as a number of resource elements on a corresponding number of sub-carrier frequencies; and wherein some of said resource elements contain pilot symbols modulated with reference information whose transmitted value is known to the receiver while others contain data symbols. The receiver is configured to determine a frequency at which a spurious interference signal may occur; determine subcarriers that may be affected by a spurious interference signal at said determined frequency; receive an OFDM signal; perform a Fast Fourier Transform operation of the received signal; determine channel estimates for each resource element from received pilot symbols, wherein channel estimates for resource elements transmitted on possibly affected subcarriers are determined by including pilot symbols transmitted on nearby, unaffected subcarriers; equalize resource elements containing data symbols; generate soft values for the received data; and using the soft values for decoding the received data.

Embodiments corresponding to those mentioned above for the method also apply for the receiver.

In one embodiment the receiver is further configured to determine a power level of said received OFDM signal; and include pilot symbols transmitted on nearby, unaffected subcarriers in determining channel estimates for resource elements transmitted on possibly affected subcarriers only if the determined received power level is below a predefined threshold. In this way the computational resources required by the method is only used at low input signal levels where the effects of the interference are worst.

The receiver may further be configured to estimate amplitude and phase of said spurious interference signal for possibly affected sub-carriers; and subtract the estimated amplitude and phase from the resource elements received on these sub-carriers.

In that case, the receiver may further be configured to determine at least one characteristic of the received signal; and select in dependence of the at least one determined characteristic between determining channel estimates by including pilot symbols from nearby, unaffected sub-carriers and estimating and subtracting amplitude and phase of the spurious interference signal from the resource elements received on possibly affected sub-carriers.

Some embodiments of the invention relate to a computer program and a computer readable medium with program code means for performing the method described above.

Brief Description of the Drawings

Embodiments of the invention will now be described more fully below with reference to the drawings, in which

Figure 1 shows a block diagram of a receiver circuit, in which the invention can be used;

Figure 2 shows pilot symbols distributed in time and frequency within the OFDM frame structure;

Figure 3 shows how a tone at a certain frequency distributes over the different frequency bins if transformed by an FFT;

Figure 4 shows a receiver circuit modified to replace pilot symbols that may be affected by a spurious interference signal;

Figure 5 shows a flow chart corresponding to the receiver circuit of Figure 4;

Figure 6 shows simulation results indicating the performance improvement with the receiver circuit of Figure 4;

Figure 7 shows a receiver circuit modified to determine and subtract the amplitude and phase of a spurious interference signal from the respective sub-carrier prior to the further processing;

Figure 8 shows a flow chart corresponding to the receiver circuit of Figure 7; and

Figure 9 shows a flow chart illustrating the choice between the two possible solutions.

Detailed Description of Embodiments

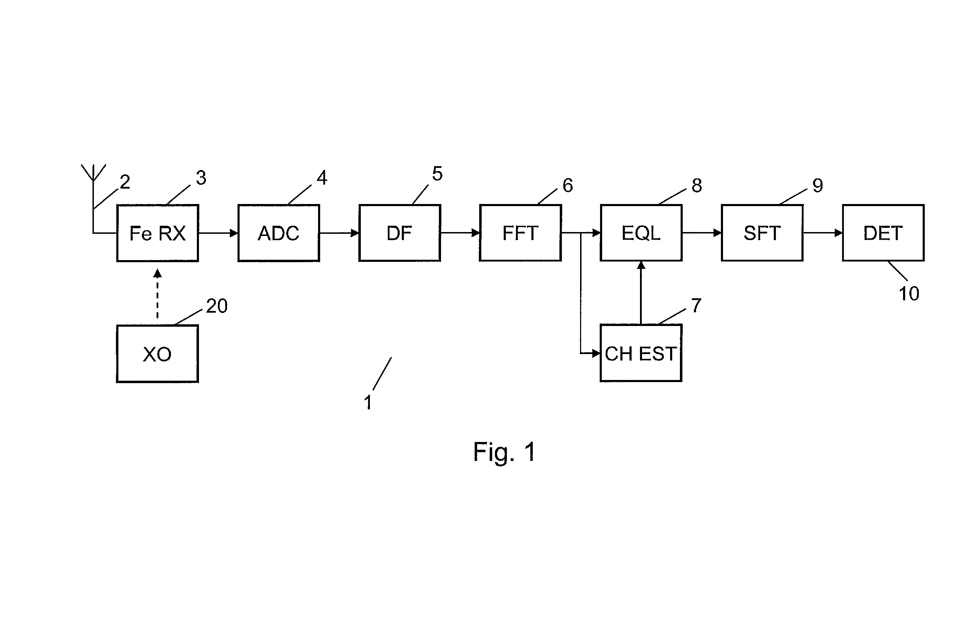

Figure 1 shows an example of a block diagram of a receiver circuit 1 for a wireless communications system employing Orthogonal Frequency Division Multiplexing (OFDM), in which the invention can be used. One example of the use of OFDM is 3G Long Term Evolution (3G LTE), which uses OFDM in the downlink.

In OFDM systems a multi carrier approach, in which an original data stream is multiplexed into a number of parallel data streams with a correspondingly low symbol rate, is used to reduce inter symbol interference by reducing the symbol rate without reducing the data rate. Inter symbol interference is caused by delay spread of the channel impulse response for the multipath channel over which the signals are transmitted. Each of the parallel data streams are modulated with a different sub-carrier frequency and the resulting signals are transmitted together in the same band from a transmitter to a receiver. Typically, a high number of different sub-carrier frequencies, i.e. several hundreds or even thousands, will be used, and these frequencies need to be very close to each other. In the receiver a Fast Fourier Transform (FFT) is used for separating the parallel data streams and recovering the original data stream.

As the OFDM signal comprises many separately-modulated sub-carriers, each transmitted symbol is considered to be divided into resource elements, each corresponding to the modulation carried on one sub-carrier during one symbol, such that the physical resource can be seen as a time-frequency grid.

To enable channel estimation, channel quality estimation, etc., dedicated symbols are transmitted. These symbols are referred to as reference symbols or pilots. These pilot symbols are resource elements distributed in time and frequency within the OFDM frame structure, i.e. the time-frequency grid, that are modulated with reference information that is known to the receiver.

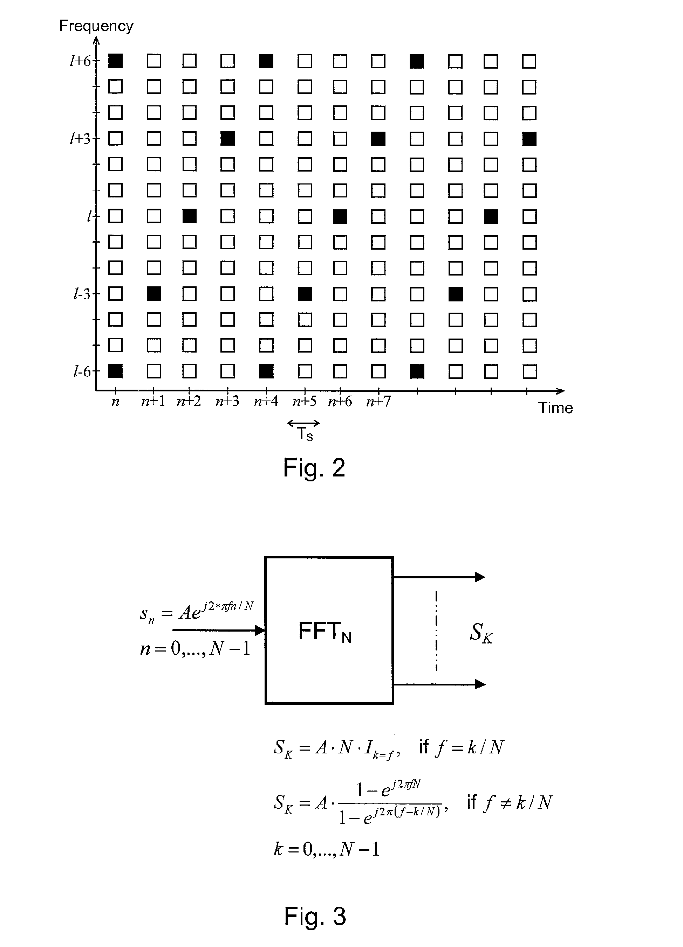

This is illustrated in Figure 2 showing a number of transmitted symbols (n, $n$+1, n+2, ...), each comprising a number of resource elements (/-6 to /+6) corresponding to the sub-carriers. White resource elements are data resource elements, while the black ones are pilot symbols. For illustrational purposes the number of sub-carriers shown in the figure has been limited to 13, although as mentioned above in a practical system it will normally be much higher. It is seen that the scattered pilot cells are transmitted on some sub-carriers intermittently.

In the receiver circuit 1 shown in Figure 1, the signal is received through the antenna 2 and down-converted in the front end receiver 3 and then sampled and converted to a digital base band signal in the analog-to-digital converter 4. The digital base band signal is then filtered in the digital filter 5 and fed to the FFT 6, in which the parallel data streams are separated. The FFT block 6 performs an FFT operation of the received base band signals to obtain the signal representation in the frequency domain. It is noted that the Fast Fourier Transform is a specific implementation of a Discrete Fourier Transform (DFT). Thus although the term FFT is used in the following description, another type of DFT could be used as well. The frequency domain signal is fed to a channel estimation block 7, in which the pilot symbols are used for estimating the corresponding transmission channel. The channel estimates are then used for equalizing the channel in the equalizer unit 8, and soft values are generated in the calculation unit 9 and fed to a decoding or detector block 10, in which the received data symbols are detected.

In the channel estimation block 7 each pilot symbol is used for estimating the channel for the corresponding position in the time-frequency grid, and from these estimates the channel is interpolated to resource elements containing data. These estimates are then used for equalizing the channel in the equalizer unit 8.

The receiver circuit 1 also includes a clock generator 20 that generates clock signals for use in the base band processing part of the receiver. Although different actions can be taken to reduce leakage, there is a risk that the clock signal will leak into the radio frequency parts of the front end receiver 3, and due to non-linear or non-ideal radio frequency components harmonics of the clock signal may be generated that can interfere with the received signal. This is especially a problem at low received signal levels close to the receiver's sensitivity level. Therefore there is a need for improving the receiver performance close to the reference sensitivity level in case of having harmonics from the baseband clock leaking into the receiver chain.

Figure 3 shows how a tone at a certain frequency f, i.e. the harmonic of a clock frequency, distributes over the different frequency bins, if transformed by an FFT of dimension n. If the spurious frequency is identical to one of the sub-carriers, i.e. f=k/N, only this sub-carrier will be affected due to the orthogonality between the sub-carriers. Thus the leakage on each sub-carrier is

$$S_K = A \cdot N \cdot I_{k=f} \, ,$$

where $I_{k=f}$ is an indicator having the value 1 for the sub-carrier having the same frequency and the value 0 for all other sub-carriers. If, on the other hand, the spurious frequency lies between two sub-carriers, the leakage on each sub-carrier is given by the expression:

$$S_K = A \cdot \frac{1 - e^{j2\pi f N}}{1 - e^{j2\pi (f - k/N)}} \, .$$

The Fourier transform of the spurious single frequency f will be a sin(x)/x type of spectrum, and thus the closer f is a certain carrier, the fewer sub-carriers are significantly affected, as can be seen from the equation, e.g. by Taylor expansion or simulation. In practice, only a few sub-carriers will be significantly affected. It is noted that in theory all sub-carriers will be affected to a certain degree, since the expression will never be exactly zero. As mentioned, however, in practice only a few sub-carriers will be significantly affected, while other sub-carriers are affected so little that it does not disturb their reception or even can not be measured. Thus in practice these subcarriers can be considered as unaffected. Therefore, in the following description and in the claims the terms affected and unaffected sub-carriers will be used.

To improve the receiver performance close to the reference sensitivity level in case of harmonics from the baseband clock leaking into the receiver chain, the mobile terminal can utilize the knowledge of the frequency of the potential harmonics leaking in to the received signal pass band. The received signal is processed by an FFT, implying that the clock harmonics map on a few frequency bins or sub-carriers. Then resource elements (i.e. sub-carrier in a certain OFDM symbol) belonging to pilots can be replaced by or weighted with pilot values interpolated from pilots transmitted on un-affected (or less affected) sub-carriers (resource elements). These can then be used in the final channel estimation algorithm. Furthermore, affected resource elements including data may be cancelled or given a proper weight in the decoding, taking the interference caused by the clock harmonics into account, i.e. the soft values for these data symbols are weighted properly prior to the decoding in the decoder.

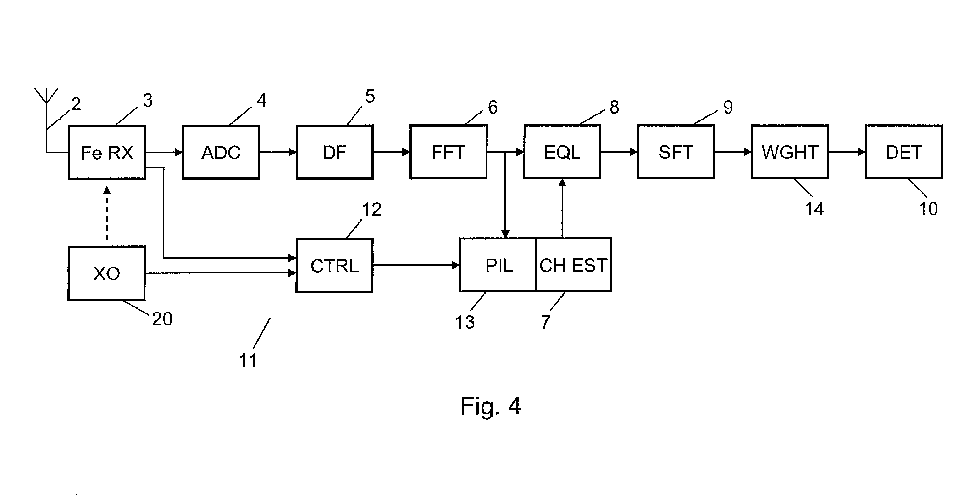

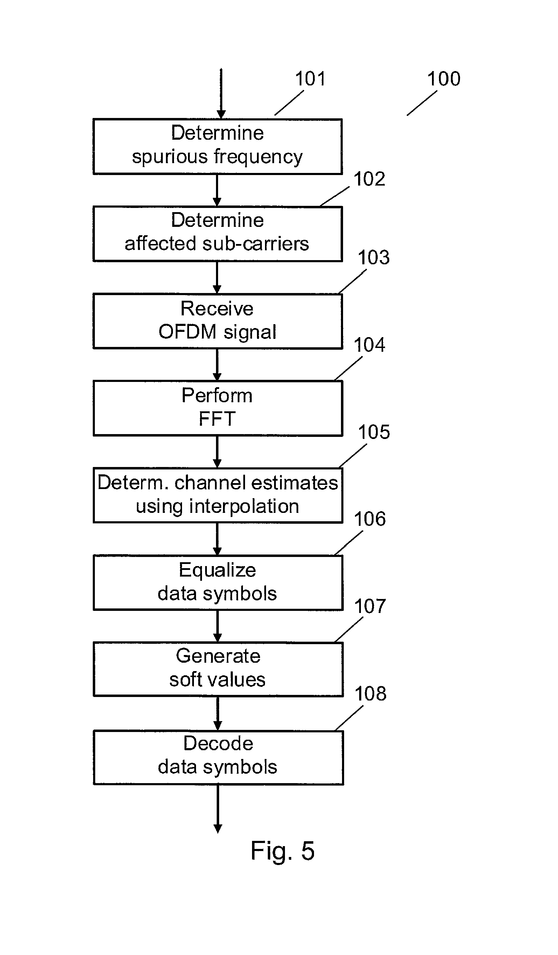

Figure 4 shows the receiver circuit of Figure 1 modified to improve the performance at low input signal levels in case of a spurious interference signal from e.g. an internal clock signal. In the modified receiver circuit 11, a control unit 12 utilizes knowledge about the clock frequency of the clock generator 20 and the frequency band of the front end receiver 3 to determine the possibly affected sub-carriers. In the shown embodiment, a pilot replace unit 13 determines pilot values to replace pilot symbols that may be affected by the spurious interference signal. Again here the term affected is taken to mean significantly affected. This is described in further detail below with reference to the flow chart 100 in Figure 5.

First, in step 101 the control unit 12 determines the potential spurious frequencies. Since the clock frequency is known to the transceiver, the harmonics can be determined. Then based on the spurious frequency, the possibly affected sub-carriers can be determined in step 102 using the formulas described above in relation to Figure 3.

Then the signal is received in step 103 and processed by the FFT in step 104. These two steps are unchanged from a standard prior art OFDM receiver.

After the FFT, resource elements including pilot symbols are fed to the channel estimation unit 7 as described above. In this case, however, pilots on resource elements affected by the spurious signal may be replaced in the pilot replacement unit 13 by pilot values determined by interpolation from adjacent non-affected pilot symbols (i.e. resource elements including pilot symbols transmitted close in time, but on another sub-carrier that is not significantly affected by the spurious signal). The possibly affected pilot symbols may either be replaced by a value obtained only by interpolation from the neighboring non-affected pilot symbols or by a weighted value between the original value and the interpolated value. The values may be weighted taking into account the effect caused by the clock harmonics. The resulting pilot values are then fed to the channel estimation unit 7, in which they are used for estimating the channel for the corresponding positions as described above in relation to Figure 1. The channel estimation is performed in step 105.

Instead the channel estimates for the corresponding positions may be interpolated directly from pilots on adjacent non-affected resource elements, i.e. without first calculating new pilot values.

Different interpolation methods can be used, such as zero order hold, linear interpolation, Wiener filter etc.

Then the channel is interpolated to resource elements containing data, according to well known methods (example Wiener filter). In an alternative embodiment, the affected pilots are skipped and the channel estimation for resource elements containing data are interpolated only from pilots transmitted on un-affected sub-carriers.

The channel is then equalized in step 106, i.e. the resource elements containing data symbols are equalized, and soft values are generated in step 107. Finally, in step 108 the soft values are fed to the detector block 10 for detection of the received data symbols.

In one embodiment, the control unit 12 may further determine which resource elements including data symbols that are affected by the spurious signal, and the soft values for these data symbols may either be cancelled, i.e. set to zero, or they may be weighted properly in the weighting unit 14 before they are fed to the detector block 9 for detection of the received data symbols.

In case of maximum-likelihood decoding and an additive white Gaussian noise (AWGN) channel, the soft information is inversely proportional to the noise power. In a preferred embodiment the soft information obtained for those symbols being affected by the interference caused by the clock harmonics is therefore made inversely proportional to the noise power + the interference power. For instance, if the interference power is equal to the noise power, the soft information obtained from a sample will be given half the weight. In another embodiment, preferably used when the interference power is large compared to the noise power, the soft information is made inversely proportional to the interference power. If the interference power is much larger than the noise power, it is readily seen that this will be a good approximation of the maximum-likelihood metric. Thus the soft values are given a proper weight in the decoding, taking the interference caused by the clock harmonics into account prior to the decoding.

With the proposed idea, resource elements affected by clock harmonics leaking into the receiver pass band are erased or weighted, and the performance is significantly improved compared to the case where the receiver does not compensate for the interference caused by the clock harmonics. The performance improvement is especially important at the reference sensitive level. The user equipment has knowledge of potential blocked sub-carriers and the cancelling or weighting of information on affected sub-carriers can easily be done with very low complexity.

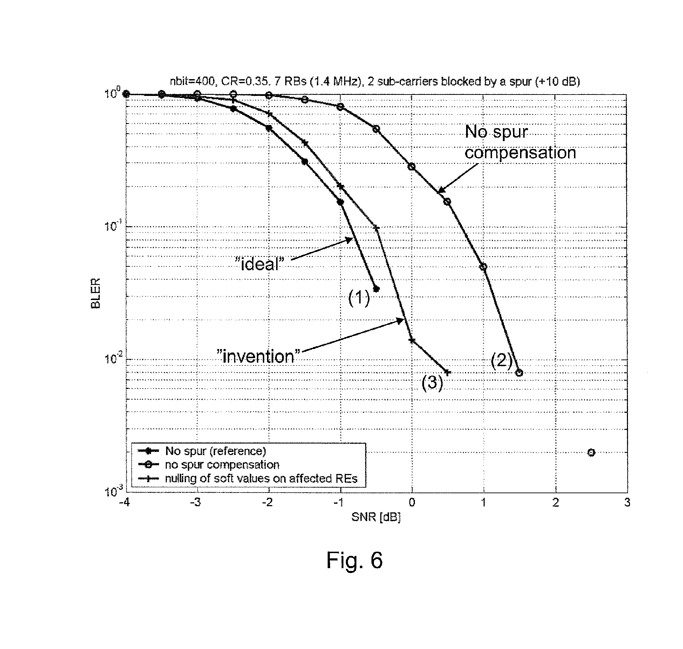

Figure 6 shows some simulation results to indicate the performance improvements with the proposed solution for signal-to-noise ratio values around the sensitivity level. 400 information bits and code rate 0.35, QPSK, which approximately corresponds to the reference sensitivity case for 1.4 MHz LTE. A signal approximately 10 dB (per sub-carrier) stronger than the thermal noise is added on two sub-carriers to mimic a clock harmonic distortion. Different cases simulated, (1) ideal without any interference, non-ideal with interference added, 4 bits soft value resolution assumed (2), and one case using the proposed solution (3). As can be seen with the proposed solution the performance gain is significant compared to "do nothing" and in fact, the performance using the invention is very close to the ideal case with (1).

It is noted that since the spurious interference signals mostly cause problems when the input signal level is low, e.g. close to sensitivity level of the receiver, the control unit 12 may also be configured to measure the input signal level and to perform step 105 only if the input signal level is below a predetermined threshold.

Another way of improving the receiver performance in case of interference from harmonics of base band clock signals leaking into the receiver chain is described below. This way may also be combined with the method described above.

Again, the mobile terminal utilizes the knowledge of the frequency of the potential harmonics leaking into the received signal pass band. The received signal is processed by the FFT, implying that the clock harmonics map on a few frequency bins or sub-carriers as described above. The clock harmonics can be seen as a slowly rotating strong signal on these sub-carriers and the average level and phase may be determined and subtracted from the respective sub-carrier prior to the further processing.

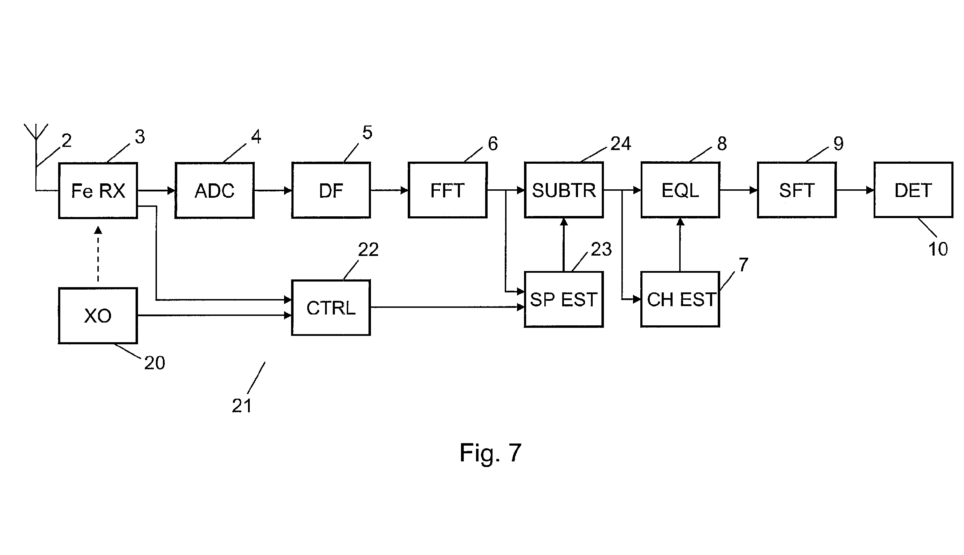

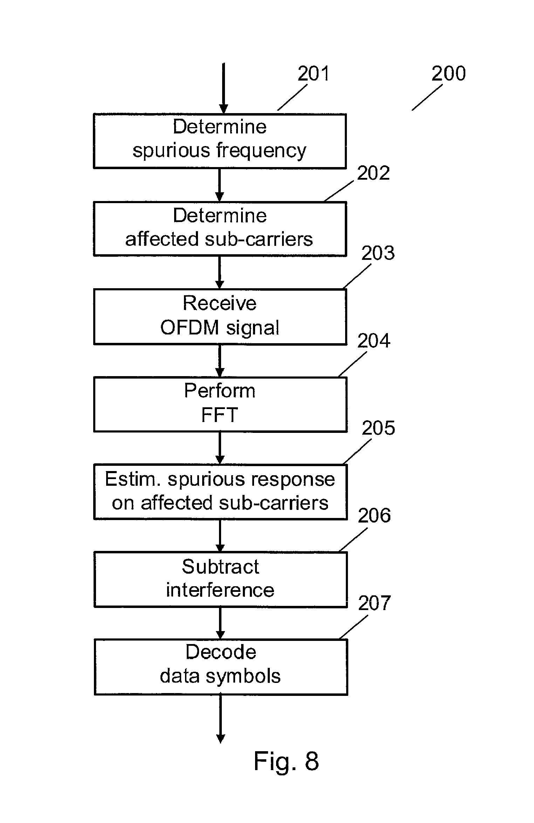

Figure 7 shows a corresponding receiver circuit modified to improve the performance at low input signal levels in case of a spurious interference signal from e.g. an internal clock signal. In the modified receiver circuit 21, a control unit 22 utilizes knowledge about the clock frequency of the clock generator 20 and the frequency band of the front end receiver 3 to determine the possibly affected sub-carriers. The spurious signal level and phase for the affected sub-carriers are estimated in the estimation unit 23 and subtracted from the corresponding resource elements in the subtracting unit 24. This is described in further detail below with reference to the flow chart 200 in Figure 8.

First, in step 201 the control unit 22 determines the potential spurious frequencies. Since the clock frequency is known to the transceiver, the harmonics can be determined. Then based on the spurious frequency, the affected sub-carriers can be determined in step 202 using the formulas described in relation to Figure 3. Then the signal is received in step 203 and processed by the FFT in step 204. After that, the spurious signal level and phase is estimated in step 205.

As the frequency of the spurious is known, it is easy to determine how it will affect the signal on a specific sub-carrier. Specifically, it is known how much it will rotate from one OFDM symbol to the next (although the amplitude and the absolute phase are unknown). By removing this known rotation (or at least take it into account), the amplitude and the phase can be estimated by proper averaging over two or more OFDM symbols. Also, since the phase for the spurious components for different sub-carriers are related, the estimation of the amplitude and phase for the spurious signal can be performed jointly for two or more sub-carriers if found beneficial. Alternatively, the estimation of the phase and amplitude for the spurious signal for the different sub-carriers is done independently for each one of the sub-carriers. This might lead to somewhat worse performance, but at a lower computational complexity. Optionally step 205 is only done if the RX signal level is below a certain level (for example -90 dBm).

Once the spurious interference level is estimated, it is subtracted from the affected sub-carriers in step 206. Then the signal is further processed in step 207 (i.e. radio channel estimated, channel equalized, and signal decoded, using methods well known in the art).

With this solution, clock harmonics leaking into the receiver pass band can be suppressed, improving the general performance especially at the reference sensitive level. The estimation and subtraction is made on slower time scale (OFDM symbol rate in LTE) compared to time domain notch filters made chip rate (a factor 128-2048 higher), and therefore it can be expected to consume considerably less energy.

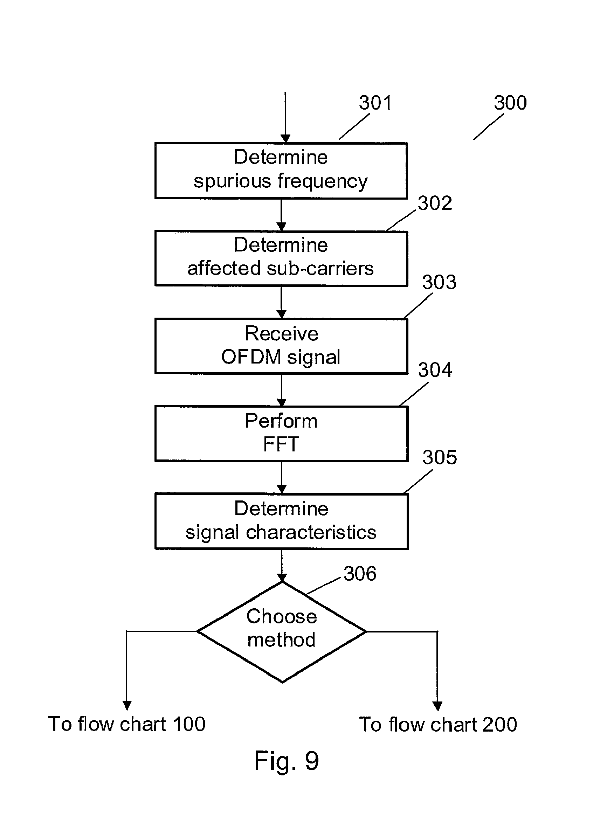

The receiver circuit may further be configured to make a choice between the two methods described above in dependence of characteristics of the received signal. This is illustrated in the flow chart 300 shown in Figure 9.

As before, the control unit 22 determines in step 301 the potential spurious frequencies. Since the clock frequency is known to the transceiver, the harmonics can be determined. Then based on the spurious frequency, the affected sub-carriers can be determined in step 302 using the formulas described in relation to Figure 3. Then the signal is received in step 303 and processed by the FFT in step 304.

In step 305 characteristics of the received signal are then determined. Examples of characteristics of the signal that can be determined could be one or more of signal strength, signal-to-noise ratio, the current service provided by the mobile terminal and a period of time for Discontinuous Reception (DRX) for the receiver. Based on the one or more determined signal characteristics the control unit can then choose to use interpolation when calculating the channel estimates for affected sub-carriers as described in relation to the flow chart 100 or to estimate and subtract the spurious interference from the affected sub-carriers as described in relation to the flow chart 200. Estimating and subtracting the spurious interference from the affected sub-carriers typically gives a better performance, but it also requires larger amounts of computational resources and longer computational time, than the interpolation method. A few examples of relevant choices are mentioned here. In case of Discontinuous Reception (DRX), interpolation in channel estimation can be chosen because the mobile terminal does not want to be on for long time for determination of the spurious amplitude/phase. In case of a high signal-to-noise ratio of the received signal, estimation and subtraction of the spurious interference can be chosen because there is a good chance of determining the spurious amplitude/phase. Also the type of service is relevant for the choice. In case of Voice over IP (VoIP) or other low rate services, interpolation in channel estimation can be chosen because only less strict performance is needed, while in case of data estimation and subtraction of the spurious interference can be chosen because higher performance is required.

Although various embodiments of the present invention have been described and shown, the invention is not restricted thereto, but may also be embodied in other ways within the scope of the subject-matter defined in the following claims.

## Claims

1. A method of compensating a spurious interference signal in a receiver (11) of a wireless communications system employing Orthogonal Frequency Division Multiplexing, OFDM, wherein the received signals comprise OFDM symbols, each OFDM symbol of a given duration being transmitted to the receiver as a number of resource elements on a corresponding number of sub-carrier frequencies; and wherein some of said resource elements contain pilot symbols modulated with reference information whose transmitted value is known to the receiver while others contain data symbols; the method comprising the steps of:

   • determining (101) a frequency at which a spurious interference signal may occur;
   • determining (102) subcarriers that may be affected by a spurious interference signal at said determined frequency;
   • receiving (103) an OFDM signal;
   • performing (104) a Fast Fourier Transform operation of the received signal;
   • determining (105) channel estimates for each resource element from received pilot symbols, wherein channel estimates for resource elements transmitted on possibly affected subcarriers are determined by including pilot symbols transmitted on nearby, unaffected subcarriers;
   • equalizing (106) resource elements containing data symbols;
   • generating (107) soft values for the received data; and
   • using (108) the soft values for decoding the received data.

2. A method according to claim 1, **characterized in that** the step of determining channel estimates comprises determining the channel estimates for resource elements transmitted on possibly affected subcarriers by interpolation from pilot symbols transmitted on nearby, unaffected subcarriers or from such pilot symbols and the possibly affected pilot symbols.

3. A method according to claim 2, **characterized in that** the step of determining channel estimates comprises the steps of:

   • replacing pilot symbols transmitted on possibly affected subcarriers by values interpolated from pilot symbols transmitted on nearby, unaffected subcarriers or from such pilot symbols and the pilot symbol to be replaced; and
   • determining the channel estimates for resource elements transmitted on possibly affected subcarriers from the replaced pilot symbols.

4. A method according to any one of claims 1 to 3, **characterized in that** the method further comprises the step of:

   • scaling soft values of data symbols of resource elements transmitted on possibly affected subcarriers by applying a weight factor prior to decoding.

5. A method according to claim 4, **characterized in that** the method further comprises the steps of:

   • determining a power level of said spurious interference signal; and
   • determining said weight factor in dependence of the determined interference power level.

6. A method according to claim 4, **characterized in that** the method further comprises the step of:

   • setting said weight factor to zero, such that the soft values of data symbols of resource elements transmitted on possibly affected subcarriers are cancelled.

7. A receiver (11) for a wireless communications system employing Orthogonal Frequency Division Multiplexing, OFDM, wherein the received signals comprise OFDM symbols, each OFDM symbol of a given duration being transmitted to the receiver as a number of resource elements on a corresponding number of sub-carrier frequencies; and wherein some of said resource elements contain pilot symbols modulated with reference information whose transmitted value is known to the receiver while others contain data symbols; the receiver being configured to:

• determine (12) a frequency at which a spurious interference signal may occur;
• determine (12) subcarriers that may be affected by a spurious interference signal at said determined frequency;
• receive (3) an OFDM signal;
• perform (6) a Fast Fourier Transform operation of the received signal;
• determine (7, 13) channel estimates for each resource element from received pilot symbols, wherein channel estimates for resource elements transmitted on possibly affected subcarriers are determined by including pilot symbols transmitted on nearby, unaffected subcarriers;
• equalize (8) resource elements containing data symbols;
• generate (9) soft values for the received data; and
• use (10) the soft values for decoding the received data.

8. A receiver according to claim 7, **characterized in that** the receiver is configured to determine the channel estimates for resource elements transmitted on possibly affected subcarriers by interpolation from pilot symbols transmitted on nearby, unaffected subcarriers or from such pilot symbols and the possibly affected pilot symbols.

9. A receiver according to claim 8, **characterized in that** the receiver is configured to:

• replace pilot symbols transmitted on possibly affected subcarriers by values interpolated from pilot symbols transmitted on nearby, unaffected subcarriers or from such pilot symbols and the pilot symbol to be replaced; and
• determine the channel estimates for resource elements transmitted on possibly affected subcarriers from the replaced pilot symbols.

10. A receiver according to any one of claims 7 to 9, **characterized in that** the receiver is further configured to:

• scale (14) soft values of data symbols of resource elements transmitted on possibly affected subcarriers by applying a weight factor prior to decoding.

11. A receiver according to claim 10, **characterized in that** the receiver is further configured to:

• determine a power level of said spurious interference signal; and
• determine said weight factor in dependence of the determined interference power level.

12. A receiver according to claim 10, **characterized in that** the receiver is further configured to:

• set said weight factor to zero, such that the soft values of data symbols of resource elements transmitted on possibly affected subcarriers are cancelled.

13. A receiver according to any one of claims 7 to 12, **characterized in that** the receiver is further configured to:

• determine a power level of said received OFDM signal; and
• include pilot symbols transmitted on nearby, unaffected subcarriers in determining channel estimates for resource elements transmitted on possibly affected subcarriers only if the determined received power level is below a predefined threshold.

14. A receiver according to any one of claims 7 to 13, **characterized in that** the receiver is further configured to:

• estimate (23) amplitude and phase of said spurious interference signal for possibly affected sub-carriers; and
• subtract (24) the estimated amplitude and phase from the resource elements received on these sub-carriers.

15. A receiver according to claim 14, **characterized in that** the receiver is further configured to:

• determine at least one characteristic of the received signal; and
• select in dependence of the at least one determined characteristic between determining channel estimates by including pilot symbols from nearby, unaffected sub-carriers and estimating and subtracting amplitude and phase of the spurious interference signal from the resource elements received on possibly affected sub-carriers.

16. A computer program comprising program code means for performing the steps of any one of the claims 1 to 6 when said computer program is run on a computer.

17. A computer readable medium having stored thereon program code means for performing the method of any one of the claims 1 to 6 when said program code means is run on a computer.

DET 10

SFT 9

EQL 8

CH EST 7

FFT 6

DF 5

ADC 4

Fe RX 3

XO 20

2

1

Fig. 1

Fig. 2

$$S_K = A \cdot N \cdot I_{k=f}, \quad \text{if } f = k/N$$

$$S_K = A \cdot \frac{1 - e^{j2\pi f/N}}{1 - e^{j2\pi(f-k/N)}}, \quad \text{if } f \neq k/N$$

$$k = 0, \dots, N-1$$

Fig. 3

Fig. 4

EP 2 403 196 A1

Fig. 5

Fig. 6

Fig. 7

Fig. 8

301

300

Determine
spurious frequency

302

Determine
affected sub-carriers

303

Receive
OFDM signal

304

Perform
FFT

305

Determine
signal characteristics

306

Choose
method

To flow chart 100

To flow chart 200

Fig. 9

Europäisches
Patentamt

European
Patent Office

Office européen
des brevets

# EUROPEAN SEARCH REPORT

Application Number

EP 10 16 7820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 321 631 B1 (ATHEROS COMM INC [US]; CHOI WON-JOON [US]; GILBERT JEFFREY M [US]; WAN) 22 January 2008 (2008-01-22)<br>* abstract *<br>* column 1 - column 2 *<br>* column 3, line 11 - line 16 *<br>* column 3, line 25 - line 31 *<br>* column 3, line 49 - line 59 *<br>* column 4, line 51 - line 59 *<br>* column 6, Pilot Mask subsection *<br>* column 6, Puncturing Using a Viterbi Mask subsection *<br>* columns 7-9, Spur Filtering for Data subsection *<br>* column 10, Channel Interpolation subsection *<br>* column 12, line 48 - line 57 *<br>* figures 4B, 9A, 9B *<br>----- | 1-17 | INV.<br>H04L25/02<br>H04L27/26 |
| X | MYEONGSU HAN ET AL: "OFDM Channel Estimation With Jammed Pilot Detector Under Narrow-Band Jamming"<br>IEEE TRANSACTIONS ON VEHICULAR TECHNOLOGY, IEEE SERVICE CENTER, PISCATAWAY, NJ, US, vol. 57, no. 3, 1 May 2008 (2008-05-01), pages 1934-1939, XP011201861<br>ISSN: 0018-9545<br>* the whole document *<br>----- | 1-3,7,8, 13,16,17 | TECHNICAL FIELDS SEARCHED (IPC)<br><br>H04L |
| X | WO 2009/093156 A1 (NXP BV [NL]; BURY ANDREAS [DE]) 30 July 2009 (2009-07-30)<br>* abstract *<br>* page 1, line 20 - page 2, line 8 *<br>* page 3, line 21 - page 4, line 10 *<br>* page 6, line 4 *<br>* claim 1 *<br>* figures 4,5 *<br>-----<br><br>-/-- | 1,7,13, 14,16,17 | |

The present search report has been drawn up for all claims

| Place of search | Date of completion of the search | Examiner |
|---|---|---|
| Munich | 23 September 2010 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 10 16 7820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/101212 A1 (YU XIAOYONG [US] ET AL) 1 May 2008 (2008-05-01) * abstract * * paragraphs [0002], [0004], [0028], [0031], [0033], [0034], [0043] * * figure 2 * | 1,7,13, 14,16,17 | |

-----

TECHNICAL FIELDS
SEARCHED      (IPC)

The present search report has been drawn up for all claims

| Place of search | Date of completion of the search | Examiner |
|---|---|---|
| Munich | 23 September 2010 | Murcia Martinez, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 16 7820

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2010

| Patent document cited in search report | | Publication date | Patent family member(s) | | Publication date |
|---|---|---|---|---|---|
| US 7321631 | B1 | 22-01-2008 | US | 2005059366 A1 | 17-03-2005 |
| | | | WO | 2005029749 A2 | 31-03-2005 |
| WO 2009093156 | A1 | 30-07-2009 | NONE | | |
| US 2008101212 | A1 | 01-05-2008 | CN | 101536322 A | 16-09-2009 |
| | | | WO | 2008055094 A2 | 08-05-2008 |

EPO FORM P0459

For more details about this annex : see Official Journal of the European Patent Office, No. 12/82